# EUROPÄISCHE PATENTANMELDUNG

(11) **EP 4 734 239 A1**
(43) Veröffentlichungstag der Anmeldung: **29.04.2026**
(21) Anmeldenummer: 25209572.4
(22) Anmeldetag: 17.10.2025
(51) Int. Cl.: H01M 50/103, H01M 50/136, H01M 50/242

(54) **PRISMATISCHES ZELLGEHÄUSE ZUM BEINFLUSSEN EINER VERFORMUNG DES ZELLGEHÄUSES AUFGRUND VON ZELL-SCHWELLUNG**

(30) Priorität: 22.10.2024 DE 102024130789
(71) Anmelder: MAN Truck & Bus SE, 80995 München (DE)
(72) Erfinder: Maaser, Christoph, 80995 München (DE); Boehme, Ulrich, 80995 München (DE); Sippl, Christian, 80995 München (DE); Burkhardt, Christian, 80995 München (DE)

(57) **Zusammenfassung**

Die vorliegende Offenbarung betrifft ein prismatisches Zellgehäuse, insbesondere Zelldose, zum wenigstens teilweisen Beeinflussen einer, insbesondere mechanischen, Verformung des prismatischen Zellgehäuses, insbesondere aufgrund von Zell-Schwellung, umfassend:
wenigstens eine Verformungsunterstützungsstruktur, die eingerichtet ist, die, insbesondere mechanische, Verformung an wenigstens einer Stelle des prismatischen Zellgehäuses zu ermöglichen und/oder zu fördern.

## Beschreibung

Die vorliegende Offenbarung bezieht sich auf ein prismatisches Zellgehäuse, insbesondere eine Zelldose, das eingerichtet ist, eine, insbesondere mechanische, Verformung des prismatischen Zellgehäuses, insbesondere aufgrund von Zell-Schwellung, wenigstens teilweise und/oder abschnittsweise zu beeinflussen.

Gehäuse für Batterien sind üblicherweise mechanischen Belastungen und/oder Ausdehnungen bzw. Verformungen ausgesetzt, insbesondere aufgrund von Zell-Schwellung z.B. während des Lade- und Entladevorgangs. Zellschwellung, auch als "Cell Swelling" bekannt, ist ein Phänomen, das bei insbesondere wiederaufladbaren Batterien, insbesondere bei Lithium-Ionen-Batterien, auftreten kann. Es beschreibt die physische Ausdehnung der Batterie aufgrund von internen chemischen Reaktionen und/oder strukturellen Veränderungen, die z.B. während des Lade- und Entladevorgangs auftreten.

Gründe für die Zellschwellung können beispielsweise chemische Reaktionen innerhalb der Batterie, insbesondere bei Überladung und/oder Überhitzung, sein, die zur Bildung von Gasen führen können. Diese Gase können sich im Inneren der Zelle sammeln und zu einer, insbesondere mechanischen, Ausdehnung führen. Ferner ist es möglich, dass der Elektrolyt sich im Laufe der Zeit zersetzt, was ebenfalls zur Gasbildung beitragen kann. Bei extremen Ladebedingungen kann sich metallisches Lithium auf der Anode ablagern, was zu internen Kurzschlüssen und Gasbildung führen kann. Die betroffene Zelle dehnt sich daher aus und kann das Gehäuse bzw. Batteriegehäuse verformen, was zu strukturellen Schäden an der Batterie und/oder den umgebenden Komponenten führen kann. Die Kapazität und die Leistung der Batterie können durch die Zellschwellung beeinträchtigt werden. Im Extremfall kann die Zellschwellung zu Leckagen, Überhitzung oder sogar Brand und Explosion führen.

Bekannte Systeme umfassen typischerweise Zellgehäuse, die aus Metall oder anderen stabilen Materialien gefertigt sind, um den inneren Druck und/oder die mechanischen Belastungen zu bewältigen. Diese Gehäuse sind oft so konstruiert, dass sie eine gewisse strukturelle Integrität bieten, um die Sicherheit und/oder die Lebensdauer der Batterie zu gewährleisten. Gemäß bekannter Technik werden verschiedene Ansätze verfolgt, um die mechanische Stabilität der Zellgehäuse zu erhöhen, beispielsweise die Verwendung von dickeren Gehäusen, bzw. größeren Wandstärken, und/oder stabileren Materialien.

Dickere Gehäuse bzw. stabilere Materialien können allerdings das Gewicht und/oder die Kosten der Batterie erhöhen, was in vielen Anwendungen unerwünscht ist. Es besteht daher ein Bedarf an innovativen Lösungen, die die mechanische Stabilität der Zellgehäuse verbessern, ohne die Effizienz und die Kosten negativ zu beeinflussen. Darüber hinaus können diese Maßnahmen die Flexibilität und Anpassungsfähigkeit der Gehäuse einschränken, was insbesondere in Anwendungen, bei denen Platz und Gewicht eine kritische Rolle spielen, nachteilig ist.

Ein weiteres Problem bei bekannten Zellgehäusen ist die ungleichmäßige Verteilung der mechanischen Belastungen, die zu lokalen Schwachstellen führen kann. Diese Schwachstellen können die strukturelle Integrität des Gehäuses beeinträchtigen und die Lebensdauer der Batterie verkürzen.

Es besteht Bedarf an weiterentwickelten Lösungen, die eine verbesserte mechanische Stabilität bieten, ohne die Effizienz, die Kosten und/oder die Herstellungsprozesse negativ zu beeinflussen. Es ist daher eine der vorliegenden Erfindung zugrunde liegende technische Aufgabe, ein Zellgehäuse bereitzustellen, das die Nachteile bekannter Systeme zumindest teilweise überwindet.

Die Aufgabe wird durch die Merkmale der unabhängigen Ansprüche gelöst. Die abhängigen Patentansprüche beschreiben bevorzugte Ausführungsformen. Weitere Aspekte, Vorteile und Merkmale ergeben sich aus den abhängigen Ansprüchen, der Beschreibung und den begleitenden Zeichnungen.

Die Erfindung betrifft ein prismatisches Zellgehäuse, insbesondere Zelldose, zum wenigstens teilweisen Beeinflussen einer, insbesondere mechanischen, Verformung des prismatischen Zellgehäuses, insbesondere aufgrund von Zell-Schwellung, umfassend:
wenigstens eine Verformungsunterstützungsstruktur, die eingerichtet ist, die, insbesondere mechanische, Verformung an wenigstens einer Stelle des prismatischen Zellgehäuses zu ermöglichen und/oder zu fördern.

Die Erfindung betrifft ein Batteriesystem, umfassend:
wenigstens ein prismatisches Zellgehäuse nach einem oder mehreren der hierin beschriebenen Aspekte und/oder Ausführungsbeispiele, und
wenigstens eine Batterie, insbesondere eine Lithium-Ionen-Batterie, die darin eingesetzt und/oder einsetzbar ist und insbesondere eine gewickelte Struktur aus Elektrodenmaterialien, insbesondere in Form einer Jelly-Roll-Struktur, aufweist.

Die hierin beschriebene Aufgabe wird insbesondere von einem prismatischen Zellgehäuse angesprochen, das eingerichtet ist, eine, insbesondere mechanische, Verformung des prismatischen Zellgehäuses, insbesondere aufgrund von Zell-Schwellung, wenigstens teilweise und/oder abschnittsweise zu beeinflussen.

Eine "Zellgehäuse" kann ein Gehäuse und/oder eine Hülle bezeichnen, welche die Komponenten einer, insbesondere elektrochemischen Zelle, beispielsweise einer Batterie, insbesondere einer Lithium-Ionen-Batterie, umfassen, umschließen, aufnehmen und/oder einschließen bzw. schützen kann. Das Zellgehäuse kann auch als Zelldose bezeichnet werden. Als Material für das Zellgehäuse können z.B. Aluminium, Stahl und/oder Kunststoffmaterialien verwendet werden.

Ein "prismatisches" Zellgehäuse kann ein Gehäuse mit einer speziellen Form sein. Ein prismatisches Zellgehäuse kann eine im Wesentlichen rechteckige und/oder flache Form aufweisen, ähnlich einem Quader oder Prisma, z.B. eine quaderförmige Struktur mit flachen Seitenflächen. Diese Bauform erleichtert das Stapeln mehrerer Zellen in engen und kompakten Anordnungen, was besonders in Anwendungen mit begrenztem Platzangebot, wie Elektrofahrzeugen, wichtig ist. Im Vergleich zur Länge, kann ein prismatisches Zellgehäuse eine geringe Dicke aufweisen.

Das Zellgehäuse kann mehrere Seiten bzw. Seitenflächen umfassen, insbesondere eine erste Stirnfläche und eine, insbesondere dieser im Wesentlichen gegenüberliegenden, zweite Stirnfläche. Die erste und/oder zweite Stirnfläche können eine Dicke des prismatischen Zellgehäuses definieren. Alternativ oder zusätzlich kann die erste und/oder zweite Stirnfläche als Seitenfläche, bzw. kürzeste Seitenflächen des prismatischen Zellgehäuses ausgebildet sein. Die erste und/oder zweite Stirnfläche definieren eine Dicke des prismatischen Zellgehäuses, was eine strukturelle Festlegung der Dimensionen des Gehäuses ermöglicht. Die erste und/oder zweite Stirnfläche können als kürzeste Seitenflächen des prismatischen Zellgehäuses ausgebildet sein, was die geometrische Ausgestaltung und/oder die räumliche Orientierung des Gehäuses spezifiziert. Dies kann bedeuten, dass die Stirnflächen die äußere Form und/oder das Volumen des Gehäuses definieren.

Die erste und/oder zweite Stirnfläche können die Endflächen des Zellgehäuses in Längsrichtung darstellen und/oder sich im Wesentlichen in Breiten- und/oder Dickenrichtung des Zellgehäuses erstrecken. Das Zellgehäuse kann ferner eine erste und zweite Seitenfläche, insbesondere eine Vorder- und Rückseite umfassen. Die erste und zweite Seitenfläche können einander gegenüberliegen und im Wesentlichen senkrecht zu der ersten und zweiten Stirnfläche verlaufen. Die erste und zweite Seitenfläche können sich in Längsrichtung des Zellgehäuses erstrecken und/oder eine Länge des Zellgehäuses definieren. Die erste und zweite Seitenfläche können die längsten Seiten des Zellgehäuses und/oder die größten Flächen des Zellgehäuses umfassen. Das Zellgehäuse kann ferner eine Oberseite, bzw. Oberfläche und eine Unterseite, bzw. Basisfläche umfassen. Die Oberseite kann eine obere Abdeckung des Gehäuses darstellen und kann verschiedene Anschlüsse und/oder Kontaktpunkte, Sensoren und/oder Sicherheitsventile umfassen. Sie kann den Zugang zu den elektrischen Verbindungen ermöglichen. Die Unterseite kann eine untere Fläche bzw. Basis des Gehäuses darstellen und gegenüber der Oberseite angeordnet sein. Sie kann Stabilität bieten und zur Befestigung der Zelle in einem Gerät und/oder einer Batterieanordnung dienen. Sie kann ebenfalls Anschlüsse und/oder Kontaktpunkte umfassen.

Eine "Zelle" kann ein elektrochemisches Energiespeichersystem sein, das eingerichtet ist, chemische Energie in elektrische Energie umzuwandeln und umgekehrt. Eine Zelle kann eine Anode z.B. eine negative Elektrode umfassen, an der die Oxidation stattfindet. In einer geladenen Lithium-Ionen-Batterie kann die Anode beispielsweise aus Graphit sein. Die Zelle kann eine Kathode z.B. positive Elektrode umfassen, an der die Reduktion stattfindet. In Lithium-Ionen-Batterien wird die Kathode oft aus Lithium-MetallOxiden hergestellt. Ein Elektrolyt kann als Medium bezeichnet werden, das Ionen zwischen Anode und Kathode transportiert. Es kann flüssig, fest und/oder gelartig sein. Ein Separator kann eine durchlässige Membran sein, die zwischen Anode und Kathode liegt und z.B. den direkten Kontakt verhindert, während sie den Ionenfluss ermöglicht. Er verhindert beispielsweise Kurzschlüsse innerhalb der Zelle.

Unter einer "mechanischen Verformung" kann eine physische bzw. strukturelle Veränderung einer Größe, Abmessung(en) und/oder Form des hierin beschriebenen Gehäuses, bzw. des prismatischen Zellgehäuses verstanden werden, beispielsweise in verschiedenen Richtungen, insbesondere in Längsrichtung/axialer Richtung, Dicken-/Breitenrichtung, und/oder Höhenrichtung. Mechanische Verformungen können z.B. eines oder mehrere von Ausdehnungen Verschiebungen, Verformungen, Ausbuchtungen, Ausbeulungen, Wellungen, Komprimierungen, Expansionen, Biegungen, Dehnungen, Streckungen, Krümmungen, Knickungen und/oder Scherungen oder dergleichen umfassen.

Eine "Verformungsunterstützungsstruktur" kann als Element und/oder Einheit bezeichnet werden, die eingerichtet ist, eine, insbesondere mechanische, Verformung des prismatischen Zellgehäuses, die insbesondere aufgrund von Zell-Schwellungen entstehen bzw. verursacht werden, zu ermöglichen, zu fördern, zu begünstigen, zu erleichtern, zuzulassen und/oder zu gestatten, insbesondere gezielt, bewusst und/oder beabsichtigt. Die Verformungsunterstützungsstruktur kann die, insbesondere mechanische, Verformung des prismatischen Zellgehäuses, wenigstens teilweise Beeinflussen und/oder wenigstens abschnittsweise, z.B. an einer gezielten, geplanten, bewussten und/oder ausgewählten Position, Stelle, einem Abschnitt und/oder einem Bereich des prismatischen Zellgehäuses. Die Verformungsunterstützungsstruktur kann als Schwächung, Schwachstelle und/oder Schwächungsstruktur bezeichnet werden. Die Verformungsunterstützungsstruktur kann die, insbesondere mechanischen, Verformungen gezielt in eine bestimmte/bevorzugte Richtung lenken und damit der Zell-Schwellung eine optimale Richtung vorgeben, in der z.B. die Verformung erlaubt, gewollt, beabsichtigt und/oder erwünscht ist. Dadurch können z.B. Auswirkungen aufgrund insbesondere mechanischer Verformungen gelenkt, gesteuert und/oder kontrolliert werden. Beispielsweise kann die Verformungsunterstützungsstruktur, insbesondere mechanische, Lasten, Kräfte und/oder Einflüsse, insbesondre gleichmäßiger, verteilen, homogenisieren, Druckeinwirkungen ausgleichen und/oder die negativen Auswirkungen von mechanischen Belastungen, Verformungen und/oder anderen mechanischen Einflüssen minimieren, insbesondere wenigstens teilweise.

Das Zellgehäuse kann eine erste Stirnfläche und eine zweite Stirnfläche umfassen, die einander im Wesentlichen gegenüberliegen. Eine oder beide dieser Stirnflächen können wenigstens eine Verformungsunterstützungsstruktur aufweisen, die eingerichtet ist, die durch die Zell-Schwellung verursachten, insbesondere mechanischen Verformungen aufzunehmen und/oder in dem prismatischen Zellgehäuse, insbesondere lokal, eine vorzugsweise gezielte, Schwachstelle vorzusehen bzw. bereitzustellen. Bei prismatischen Zellen erfolgt eine Ausdehnung aufgrund von Zellschwellung größtenteils in Dickenrichtung. Überraschenderweise wurde festgestellt, dass die Anordnung der Verformungsunterstützungsstruktur auf einer oder beider Stirnflächen eine gleichmäßigere Verteilung der Kräfte bzw. Einflüsse ermöglicht, die Belastungen und/oder Druckeinwirkungen, homogenisiert, ausgleicht und/oder gleichmäßiger verteilt und dadurch das Risiko von Materialversagen minimieren und/oder eine Zellalterung verlangsamen kann. Dies ist selbst dann gegeben, wenn die Verformungsunterstützungsstruktur ausschließlich auf den Stirnflächen (z.B. wenigstens einer) angeordnet sind, d.h. auf den Seitenflächen (Vorder- bzw. Rückseite der Zelle), auf denen der überwiegende Druck/die überwiegende Ausdehnung herrscht, keine Verformungsunterstützungsstrukturen vorgesehen sind. Technisch gesehen ermöglicht die Verformungsunterstützungsstruktur eine verbesserte Druckverteilung und kann die Herausforderung der mechanischen Deformationen, die durch das Aufquellen der Zellen verursacht werden, angehen bzw. gezielt in eine bestimmte Richtung lenken/leiten. Dies kann zu einer längeren Lebensdauer und einer höheren Zuverlässigkeit des Zellgehäuses führen. Darüber hinaus kann die Verformungsunterstützungsstruktur dazu beitragen, die strukturelle Integrität des Gehäuses zu bewahren, selbst unter extremen Betriebsbedingungen, was besonders wichtig für Anwendungen in der Elektromobilität oder in stationären Energiespeichersystemen ist.

Die zweite Stirnfläche des Gehäuses kann im Wesentlichen gegenüber der ersten Stirnfläche angeordnet sein. Diese Anordnung ermöglicht eine symmetrische Verteilung der mechanischen Verformungen und trägt zur Stabilität des gesamten Zellgehäuses bei. Die zweite Stirnfläche fungiert als Gegenstück zur ersten Stirnfläche und ist entscheidend für die strukturelle Balance des Gehäuses. Die strukturelle Interaktion zwischen den Stirnflächen und den Verformungsunterstützungsstrukturen ermöglicht eine gemeinsame Aufnahme von mechanischen Kräften, Belastungen und/oder Verformungen. Die Verformungsunterstützungsstruktur auf den Stirnflächen (oder wenigstens einer davon) können als mechanische Lenker/Leiter wirken, die die Kräfte und/oder mechanischen Verformungen gleichmäßiger verteilen und/oder die Funktionalität der Zelle gewährleisten.

Das prismatische Zellgehäuse kann eingerichtet sein zur Aufnahme einer Batterie, insbesondere einer Lithium-Ionen-Batterie, die eine gewickelte Struktur aus Elektrodenmaterialien aufweist, insbesondere in Form einer Jelly-Roll-Struktur. Das Zellgehäuse kann die Batterie sicher und/oder stabil halten bzw. aufnehmen. Dies ist besonders wichtig für Lithium-Ionen-Batterien, die für ihre hohe Energiedichte und die damit verbundenen Risiken bekannt sind. Die gewickelte Struktur aus Elektrodenmaterialien, insbesondere in Form einer Jelly-Roll-Struktur, ist eine Bauweise für Lithium-Ionen-Batterien, bei der die Elektroden und Separatoren in einer im Wesentlichen spiralförmigen Anordnung gewickelt sein könne. Diese Struktur ermöglicht eine kompakte und effiziente Nutzung des verfügbaren Raums innerhalb des Zellgehäuses und trägt zur Leistungsfähigkeit und Langlebigkeit der Batterie bei.

Die wenigstens eine Verformungsunterstützungsstruktur kann z.B. durch das prismatische Zellgehäuse selbst, insbesondere durch die erste und/oder zweite Stirnfläche ausgebildet sein, insbesondere einstückig und/oder integral damit. Mit anderen Worten, die Verformungsunterstützungsstruktur kann ein integraler Bestandteil des prismatischen Zellgehäuses bzw. der ersten/zweiten Stirnfläche sein. Alternativ dazu ist denkbar, dass die Verformungsunterstützungsstruktur als separates Element ausgebildet und/oder hinzugefügt wird. Diese Ausgestaltung bringt mehrere Vorteile mit sich. Erstens wird die strukturelle Integrität des Zellgehäuses erhöht, da die Verformungsunterstützungsstruktur und die Stirnfläche(n) eine im Wesentlichen einheitliche und/oder nahtlose Komponente bilden. Dies vereinfacht die Konstruktion und den Herstellungsprozess, da keine zusätzlichen Schritte zur Befestigung und/oder Integration der Verformungsunterstützungsstruktur erforderlich sind. Dies kann zu Kosteneinsparungen und einer höheren Produktionsgeschwindigkeit führen. Ferner kann die einstückige Ausbildung der Verformungsunterstützungsstruktur mit der Gehäuse bzw. der ersten und/oder zweiten Stirnfläche dazu beitragen, das Gewicht des Zellgehäuses zu reduzieren, da keine zusätzlichen Materialien und/oder Befestigungselemente benötigt werden. Dies ist besonders vorteilhaft in Anwendungen, bei denen das Gewicht eine kritische Rolle spielt, wie beispielsweise in der Automobil- oder Luftfahrtindustrie. Darüber hinaus ermöglicht die einstückige Konstruktion eine gleichmäßigere Verteilung der mechanischen Belastungen bzw. Verformungen, da die Verformungsunterstützungsstruktur direkt bzw. unmittelbar auf die Zell-Schwellung reagieren kann.

Die wenigstens eine Verformungsunterstützungsstruktur kann sich im Wesentlichen über die gesamte erste und/oder zweite Stirnfläche erstrecken, vorzugsweise in Richtung einer Höhe des prismatischen Zellgehäuses, z.B. in Höhenrichtung oder eine vertikale Richtung. "Im Wesentlichen über die gesamte erste und/oder zweite Stirnfläche" kann bedeuten, dass sich die wenigstens eine Verformungsunterstützungsstruktur über die gesamte erste und/oder zweite Stirnfläche verläuft und lediglich die Rand- bzw. Endpunkte ausgenommen sind, z.B. um eine durch das Gehäuse definierte Öffnung, z.B. zum Einsetzen der Batterie, nicht zu beschädigen. Durch die im Wesentlichen vollständige Abdeckung der ersten/zweiten Stirnfläche(n) mit der wenigstens einen Verformungsunterstützungsstruktur kann eine gleichmäßigere Verteilung der mechanischen Spannungen/Belastungen und damit Verformungen erreicht werden, die durch die Zell-Schwellung verursacht werden. Dies kann die, insbesondere mechanischen, Verformungen gezielt in eine bestimmte/bevorzugte Richtung lenken und damit der Zell-Schwellung eine optimale Richtung vorgeben.

Die wenigstens eine Verformungsunterstützungsstruktur kann in verschiedenen Formen, Verläufen, Neigungen, Orientierungen, Mustern, Abmessungen und/oder Geometrien und/oder unterschiedlicher Anzahl ausgeführt bzw. ausgebildet sein, um eine Verformung des Zellgehäuses zu beeinflussen.

Beispielsweise kann die wenigstens eine Verformungsunterstützungsstruktur in Form von einer oder mehreren Erhebungen, Erhöhungen, Auskragungen, Ausbuchtungen und/oder Vorsprüngen ausgebildet sein, beispielsweise als Rippe, Welle, Strebe und/oder Leiste. Auch eine stufenartige Form wäre denkbar. Derartige Verformungsunterstützungsstruktur können beispielsweise von dem Zellgehäuse abstehen/vorstehen, bzw. sich in eine Richtung außerhalb des Gehäuses, z.B. nach außen erstrecken. Durch die Integration einer Erhebung als Verformungsunterstützungsstruktur auf mindestens einer dieser Stirnflächen wird die strukturelle Integrität des Zellgehäuses signifikant erhöht. Die Lastverteilung auf den Stirnflächen können dadurch optimiert werden und somit mechanischen Verformungen gezielt beeinflusst, bzw. gelenkt werden. Durch diese Verformungsunterstützungsstruktur kann eine gleichmäßigere Verteilung der mechanischen Spannungen/Verformungen erreicht, was die Lebensdauer und Zuverlässigkeit der Zelle erhöht.

Diese Verformungsunterstützungsstruktur, die auf der ersten und/oder der zweiten Stirnfläche des Gehäuses angebracht ist, kann eine im Wesentlichen konstante Höhe aufweisen. Die im Wesentlichen konstante Höhe der Verformungsunterstützungsstruktur kann sicherstellen, dass die mechanischen Verformungen des Zellgehäuses gleichmäßig über die gesamte Fläche verteilt wird. Dies führt zu einer gleichmäßigen Verteilung der mechanischen Spannungen, die durch die Schwellung der Zelle verursacht werden.

Beispielsweise kann die wenigstens eine Verformungsunterstützungsstruktur in Form von einer oder mehreren Vertiefungen, Ausnehmungen und/oder Aussparung ausgebildet sein, beispielsweise als Verprägung, Rille, Nut, Tasche und/oder Sicke. Auch eine stufenartige Form wäre denkbar. Derartige Verformungsunterstützungsstruktur können sich beispielsweise von dem Zellgehäuse nach innen erstrecken, bzw. sich in eine Richtung innerhalb des Gehäuses, z.B. zur Batterie hin, erstrecken. Diese Verformungsunterstützungsstruktur kann als z.B. in die (erste und/oder zweite) Stirnfläche eingearbeitet sein und, insbesondere in Bezug auf das Gehäuse bzw. Gehäuseoberfläche, eine gewisse Tiefe aufweisen. Diese spezifische Ausgestaltung der Verformungsunterstützungsstruktur ermöglicht eine gezielte Steuerung der mechanischen Eigenschaften der Stirnflächen, beispielsweise eine gleichmäßige Verteilung der mechanischen Spannungen/Verformungen und kann dazu beitragen, dass die Stirnflächen den durch die Zell-Schwellung verursachten Druck besser aufnehmen und verteilen können.

Die wenigstens eine Verformungsunterstützungsstruktur kann eine im Wesentlichen konstante Tiefe aufweisen. Eine konstante Tiefe der Verformungsunterstützungsstruktur kann für eine gleichmäßige Verteilung der mechanischen Spannungen sorgen, die durch die Zell-Schwellung verursacht werden können. Wenn die Tiefe der Verformungsunterstützungsstruktur konstant ist, können standardisierte Werkzeuge und Verfahren verwendet werden, um die Verformungsunterstützungsstrukturen in die Stirnflächen des Gehäuses einzubringen. Dies reduziert die Produktionskosten und erhöht die Effizienz.

Beispielsweise kann die wenigstens eine Verformungsunterstützungsstruktur in Form von einem, insbesondere regelmäßigen oder unregelmäßigen, geometrischen Muster ausgebildet sein, z.B. in Form einer Wabenstruktur bzw. wabenartige Struktur. Dies kann z.B. als Erhebung oder als Vertiefung in das Gehäuse eingebracht sein. Die, vorzugsweise regelmäßige, Wabenstruktur kann eine Mehrzahl von ausgebildeten Waben umfassen, die beispielsweise vieleckige, etwa dreieckige, viereckige, etc. beispielsweise trapezförmige, fünfeckige oder sechseckige etc., Wabenquerschnitte aufweisen.

Die wenigstens eine Verformungsunterstützungsstruktur, sei es als Erhebung oder Vertiefung, kann eine Schwächungsstruktur sein, die eingerichtet ist, in dem prismatischen Zellgehäuse, insbesondere lokal, eine vorzugsweise gezielte, Schwachstelle, z.B. an einem bestimmten, geplanten und/oder geeigneten Bereich, vorzusehen Die wenigstens eine Verformungsunterstützungsstruktur kann im Wesentlichen punktförmig oder im Wesentlichen linienförmig ausgebildet sein. Dies ermöglicht eine präzisere und/oder gezieltere und vor allem gesteuerte Beeinflussung und/oder Verteilung der mechanischen Spannungen/Verformungen, die insbesondere durch die Zell-Schwellung verursacht werden.

Eine im Wesentlichen punktförmige Verformungsunterstützungsstruktur, z.B. in Form von Noppen, kann ein spezifischer Punkt und/oder Bereich sein anstelle einer großflächigen Region. Durch die punktförmige Verformungsunterstützungsstruktur können gezielte Bereiche eingeführt werden, in denen die Verformungen erwünscht bzw. gewollt sind.

Eine linienförmige Verformungsunterstützungsstruktur die auf dem Gehäuse bzw. einer Oberfläche des Gehäuses angeordnet ist, kann z.B. im Wesentlichen geradlinig, geneigt, gewinkelt, schräg, gebogen, bogenförmig, geschwungen etc. und/oder im Wesentlichen konstant oder aber unterbrochen, z.B. mit einer oder mehreren Unterbrechungen/Lücken verlaufen, was eine gleichmäßigere Verteilung der Spannungen/Verformungen entlang dieser Linie ermöglichen kann.

Beide Formen der Verformungsunterstützungsstruktur tragen gemeinsam oder unabhängig voneinander dazu bei, die mechanischen Verformungen, die durch die Zell-Schwellung verursacht werden, effektiv zu verteilen bzw. zu homogenisieren. Es sei anzumerken, dass die punktförmige und linienförmige Verformungsunterstützungsstruktur auch in Kombination verwendet werden können, um z.B. eine noch differenziertere und effizientere Spannungs-/Verformungsverteilung zu erreichen. Diese Kombination ermöglicht es, die Vorteile beider Strukturen zu nutzen und eine optimale Balance zwischen Festigkeit und Flexibilität zu erzielen.

Das prismatische Zellgehäuse kann eine Mehrzahl von Verformungsunterstützungsstrukturen auf der ersten und/oder zweiten Stirnfläche aufweisen. Diese Mehrzahl von Verformungsunterstützungsstrukturen ermöglicht eine gleichmäßigere Verteilung der mechanischen Belastungen, die durch die Zell-Schwellung entstehen können. Zudem kann die Mehrzahl von Verformungsunterstützungsstrukturen dazu die gleichmäßigere Verteilung der Verformungen zu verbessern.

Die Mehrzahl von Verformungsunterstützungsstrukturen kann im Wesentlichen gleichmäßig über die erste und/oder zweite Stirnfläche verteilt angeordnet sein, insbesondere im Wesentlichen über eine gesamte Breite des prismatischen Zellgehäuses. Diese gleichmäßige Verteilung der Verformungsunterstützungsstrukturen gewährleistet eine homogene Verteilung der mechanischen Belastungen, die durch die Zell-Schwellung entstehen können, und verhindert somit lokale Überbeanspruchungen, die zu Materialversagen führen könnten. Darüber hinaus können die Verformungsunterstützungsstrukturen im Wesentlichen parallel zueinander angeordnet sein und/oder können im Wesentlichen parallel zueinander verlaufen. Diese parallele Anordnung kann dazu beitragen, dass die Verformungsunterstützungsstrukturen gemeinsam und/oder koordiniert auf mechanische Belastungen reagieren, was eine gleichmäßige Verteilung der Kräfte ermöglicht. Dies führt zu einer verbesserten Stabilität und/oder Langlebigkeit des Zellgehäuses, da die parallelen Verformungsunterstützungsstrukturen die mechanischen Spannungen gleichmäßig ableiten und/oder verteilen. Ferner können die Verformungsunterstützungsstrukturen im Wesentlichen gleichmäßig zueinander beabstandet sein. Diese gleichmäßige Abstandsverteilung kann sicherstellen, dass keine Bereiche innerhalb der Stirnflächen existieren, die ungeschützt und/oder unterversorgt mit Verformungsunterstützungsstrukturen sind, was wiederum die Gefahr von lokalen Schwachstellen minimiert. Die gleichmäßige Beabstandung der Verformungsunterstützungsstrukturen trägt somit zu einer gleichmäßigen mechanischen Belastungsverteilung bei und verhindert die Konzentration von Spannungen in bestimmten Bereichen.

Die Mehrzahl von Verformungsunterstützungsstrukturen kann unterschiedliche hierin beschriebene Verformungsunterstützungsstrukturen umfassen bzw. kombinieren, beispielsweise wenigstens eine erste Verformungsunterstützungsstruktur in Form einer Erhebung und wenigstens eine zweite Verformungsunterstützungsstruktur in Form einer Vertiefung. Auch andere Kombinationen, z.B. mit einem geometrischen Muster sind denkbar. Diese spezifischen Mechanismen der Kommunikation zwischen den Komponenten der Verformungsunterstützungsstrukturen ermöglichen es dem Zellgehäuse, mechanische Spannungen effizienter zu verteilen, wodurch die Lebensdauer und Zuverlässigkeit der Zelle erhöht werden.

Die Seitenflächen des prismatischen Zellgehäuses, welche eine Länge des prismatischen Zellgehäuses definieren, können im Wesentlichen frei von Verformungsunterstützungsstrukturen sein, beispielsweise also im Wesentlichen flach und/oder eben ausgebildet sein. Diese Anordnung kann dazu beitragen, dass die Seitenflächen eine gewisse Elastizität behalten, wodurch mechanische Spannungen und/oder Belastungen, die durch die Zell-Schwellung verursacht werden, gezielt auf bestimmte Bereiche, wie die Stirnfläche(n) konzentriert/fokussiert werden.

Im Gegensatz dazu ist es auch denkbar, dass alle Seitenflächen (z.B. die erste/zweite Stirnfläche, die erste/zweite Seitenfläche bzw. Vorder- und Rückseite; nicht jedoch die Ober- und Unterseite) des prismatischen Zellgehäuses wenigstens eine oder eine Mehrzahl von Verformungsunterstützungsstruktur(en) aufweisen. Mit anderen Worten, jede der Seitenflächen des Gehäuses kann mit zusätzlichen strukturellen Elementen versehen sein, welche die Verformungen gleichmäßiger verteilen können.

### KURZBESCHREIBUNG DER ZEICHNUNGEN

Ausführungsbeispiele der Erfindung werden nun unter Bezugnahme auf die beigefügten Zeichnungen beschrieben. Damit die oben genannten Merkmale der vorliegenden Offenbarung im Detail verstanden werden können, kann eine detailliertere Beschreibung der Offenbarung, die oben kurz zusammengefasst wurde, durch Bezugnahme auf Ausführungsbeispiele erhalten werden. Die begleitenden Zeichnungen beziehen sich auf Ausführungsformen der Offenbarung und werden im Folgenden beschrieben:
- Fig. 1A: zeigt prismatische Zellgehäuse gemäß dem Stand der Technik, das eine Batterie aufgenommen hat;
- Fig. 1B: zeigt das prismatische Zellgehäuse aus Fig. 1A ohne die Batterie; und
- Fig. 2: zeigt eine ein prismatisches Zellgehäuse gemäß der Erfindung.

### BESCHREIBUNG BEVORZUGTER AUSFÜHRUNGSFORMEN

Im Folgenden soll die Erfindung anhand von in den Zeichnungen dargestellten Ausführungsformen näher erläutert werden, wobei in sämtlichen Zeichnungen im Wesentlichen funktionsgleiche Elemente die gleichen Bezugszeichen haben.

Die Zeichnungen sind schematische Zeichnungen, die nicht maßstabsgetreu sind. Einige Elemente in den Zeichnungen können übertriebene Abmessungen aufweisen, um Aspekte der vorliegenden Offenbarung zu betonen und/oder für eine bessere Präsentationsklarheit. Zur Vereinfachung werden identische Bezugszeichen verwendet, um identische Elemente zu kennzeichnen, die in den Zeichnungen gemeinsam enthalten sind. Es ist vorgesehen, dass Elemente und Merkmale einer Ausführungsform vorteilhaft in andere Ausführungsformen ohne weitere Erwähnung eingebaut werden können. Im Allgemeinen werden nur die Unterschiede bezüglich individueller Ausführungsformen beschrieben.

Jedes Ausführungsbeispiel dient zur Erläuterung der Offenbarung und soll nicht als Beschränkung der Offenbarung verstanden werden. Darüber hinaus können Merkmale, die als Teil einer Ausführungsform dargestellt oder beschrieben werden, in Verbindung mit anderen Ausführungsformen verwendet werden, um eine weitere Ausführungsform zu erzeugen. Es ist beabsichtigt, dass die Beschreibung solche Modifikationen und Variationen einschließt.

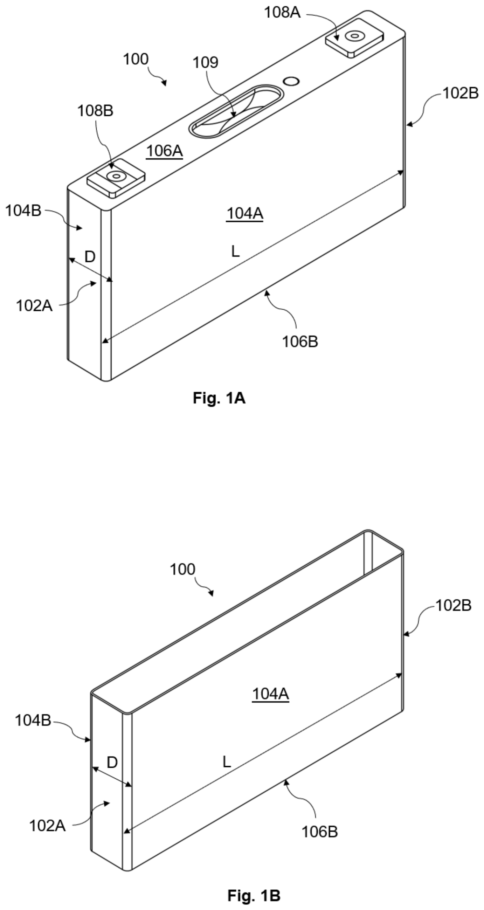

Fig. 1A und 1B zeigt ein prismatisches Zellgehäuse 100 gemäß dem Stand der Technik. Das Zellgehäuse 100 kann mehrere Seiten bzw. Seitenflächen umfassen, insbesondere eine erste Stirnfläche 102A und eine, insbesondere dieser im Wesentlichen gegenüberliegenden, zweite Stirnfläche 102B. Die erste und/oder zweite Stirnfläche 102A, 102B können eine Dicke D des prismatischen Zellgehäuses 100 definieren. Alternativ oder zusätzlich kann die erste und/oder zweite Stirnfläche 102A, 102B als kürzeste Seitenflächen des prismatischen Zellgehäuses 100 ausgebildet sein. Die erste und/oder zweite Stirnfläche 102A definieren eine Dicke D des prismatischen Zellgehäuses 100, was eine strukturelle Festlegung der Dimensionen des Gehäuses 100 ermöglicht. Die erste und/oder zweite Stirnfläche 102A, 102B können als kürzeste Seitenflächen des prismatischen Zellgehäuses 100 ausgebildet sein, was die geometrische Ausgestaltung und/oder die räumliche Orientierung des Gehäuses 100 spezifiziert. Dies kann bedeuten, dass die Stirnflächen 102A, 102B die äußere Form und/oder das Volumen des Gehäuses 100 definieren. Die erste und/oder zweite Stirnfläche 102A, 102B können die Endflächen des Zellgehäuses 100 in Längsrichtung L darstellen und/oder sich im Wesentlichen in Breiten- und/oder Dickenrichtung D des Zellgehäuses 100 erstrecken. Das Zellgehäuse 100 kann ferner eine erste und zweite Seitenfläche 104A, 104B, insbesondere eine Vorderseite, z.B. 104A und eine Rückseite, z.B. 104B umfassen. Die erste und zweite Seitenfläche 104A, 104B können einander gegenüberliegen und im Wesentlichen senkrecht zu der ersten und zweiten Stirnfläche 102A, 102B verlaufen. Die erste und zweite Seitenfläche 104A, 104B können sich in Längsrichtung L des Zellgehäuses 100 erstrecken und/oder eine Länge L des Zellgehäuses 100 definieren. Die erste und zweite Seitenfläche 104A, 104B können die längsten Seiten des Zellgehäuses 100 und/oder die größten Flächen des Zellgehäuses 100 umfassen. Das Zellgehäuse 100 kann ferner eine Oberseite 106A, bzw. Oberfläche 106A und eine Unterseite 106A, bzw. Basisfläche 106B umfassen. Die Oberseite 106A kann eine obere Abdeckung des Gehäuses 100 darstellen und z.B. eine Kathode 108A z.B. positive Elektrode 108A und eine Anode 108B, z.B. negative Elektrode 108B, sowie einen Separator 109 zwischen Anode 108B und Kathode 108A umfassen. Die Unterseite 106B kann eine untere Fläche 106B bzw. Basis des Gehäuses 100 darstellen und gegenüber der Oberseite 106A angeordnet sein.

Wie in den Fig. 1A und 1B zu erkennen, ist das Zellgehäuse 100, insbesondere die Seitenflächen, d.h. die Stirnflächen 102A, 102B sowie die Seitenflächen 104A, 104B (und auch Flächen 106A, 106B), frei von Verformungsunterstützungsstrukturen, z.B. im Wesentlichen flach und/oder eben.

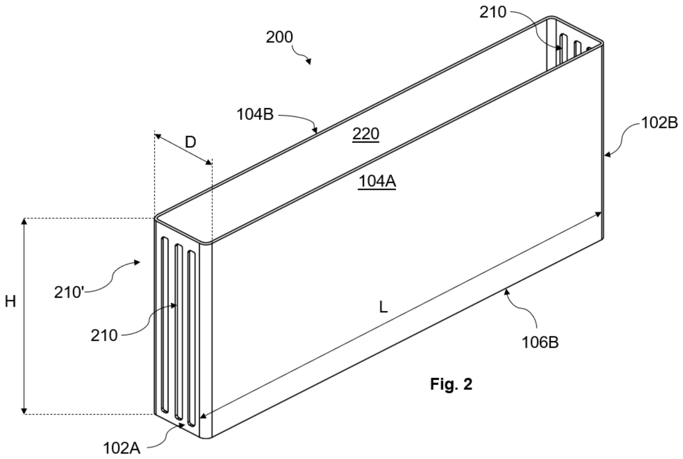

Fig. 2 zeigt ein prismatisches Zellgehäuse 200, insbesondere Zelldose, zum wenigstens teilweisen Beeinflussen einer, insbesondere mechanischen, Verformung, insbesondere aufgrund von Zell-Schwellung. Das Zellgehäuse 200 entspricht im Wesentlichen dem Zellgehäuse 100 aus den Fig. 1A bzw. 1B, abgesehen von der wenigstens einen Verformungsunterstützungsstruktur 210, welche an dem Zellgehäuse 200 bereitgestellt ist. Insofern können die Ausführungen der Fig. 1A und 1B analoge Anwendung finden und/oder im Wesentlichen identische Bezugszeichen verwendet werden.

Wie in Fig. 2 gezeigt, kann das Zellgehäuse 200 eine erste Stirnfläche 102A und eine zweite Stirnfläche 102B umfassen, die einander im Wesentlichen gegenüberliegen. Eine oder beide dieser Stirnflächen 102A, 102B weisen wenigstens eine Verformungsunterstützungsstruktur 210 auf, die eingerichtet ist, die durch die Zell-Schwellung verursachten Belastungen aufzunehmen und/oder zu verteilen. Bei prismatischen Zellen erfolgt eine Ausdehnung aufgrund von Zellschwellung größtenteils in Dickenrichtung D. Überraschenderweise wurde festgestellt, dass die Anordnung der Verformungsunterstützungsstruktur 210 auf einer oder beider Stirnflächen 102A, 102B eine gleichmäßigere Verteilung der Kräfte ermöglicht, die Belastungen und/oder Druckeinwirkungen, homogenisiert, ausgleicht und/oder gleichmäßiger verteilt und dadurch eine Zellalterung verlangsamen kann. Dies ist selbst dann gegeben, wenn die wenigstens eine Verformungsunterstützungsstruktur 210, insbesondere ausschließlich, auf den (nur einer oder beider) Stirnflächen 102A, 102B angeordnet sind, d.h. auf den Seitenflächen 104A, 104B (Vorderseite 104A bzw. Rückseite 104B der Zelle 100), auf denen der überwiegende Druck/die überwiegende Ausdehnung herrscht, keine Verformungsunterstützungsstrukturen vorgesehen sind. Technisch gesehen ermöglicht die Verformungsunterstützungsstruktur eine verbesserte Druckverteilung und kann die Herausforderung der mechanischen Deformationen, die durch das Aufquellen der Zellen verursacht werden, angehen. Dies kann zu einer längeren Lebensdauer und einer höheren Zuverlässigkeit des Zellgehäuses führen. Darüber hinaus kann die Verformungsunterstützungsstruktur 210 dazu beitragen, die strukturelle Integrität des Gehäuses zu bewahren, selbst unter extremen Betriebsbedingungen, was besonders wichtig für Anwendungen in der Elektromobilität oder in stationären Energiespeichersystemen ist.

Das prismatische Zellgehäuse 200 weist eine im Wesentlichen rechteckige und/oder flache Form auf, ähnlich einem Quader oder Prisma, z.B. eine quaderförmige Struktur mit flachen Seitenflächen. Diese Bauform erleichtert das Stapeln mehrerer Zellen in engen und kompakten Anordnungen, was besonders in Anwendungen mit begrenztem Platzangebot, wie Elektrofahrzeugen, wichtig ist. Die Seitenflächen 104A, 104B des Zellgehäuses 200 erstrecken sich in Längsrichtung L und sind im Wesentlichen frei von Verformungsunterstützungsstrukturen, um eine optimale Raumausnutzung und Stabilität zu gewährleisten.

Das prismatische Zellgehäuse 200 kann eingerichtet sein zur Aufnahme einer Batterie (nicht gezeigt), insbesondere einer Lithium-Ionen-Batterie, die eine gewickelte Struktur aus Elektrodenmaterialien aufweist, insbesondere in Form einer Jelly-Roll-Struktur. Das Zellgehäuse 200 kann die Batterie sicher und/oder stabil halten bzw. aufnehmen.

Die wenigstens eine Verformungsunterstützungsstruktur 210 kann durch das Gehäuse bzw. durch die erste und/oder zweite Stirnfläche 102A, 102B ausgebildet sein, insbesondere einstückig damit. Mit anderen Worten, die Verformungsunterstützungsstruktur 210 kann ein integraler Bestandteil der ersten und/oder zweiten Stirnfläche 102A, 102B sein, wie in Fig. 2 dargestellt.

Die wenigstens eine Verformungsunterstützungsstruktur 210 kann sich im Wesentlichen über die gesamte erste und/oder zweite Stirnfläche 102A, 102B erstrecken, vorzugsweise in Richtung einer Höhe H des prismatischen Zellgehäuses 200, z.B. in Höhenrichtung H, wie in Fig. 2 dargestellt. Zu den Randbereichen bzw. Kanten kann jeweils ein kleiner Abstand vorgesehen sein, z.B. um die Stabilität, insbesondere beim Herstellungsprozess, nicht zu gefährden. Durch die im Wesentlichen vollständige Abdeckung der Stirnflächen 102A, 102B mit der wenigstens einen Verformungsunterstützungsstruktur 210 kann eine gleichmäßigere Verteilung der mechanischen Spannungen/Belastungen erreicht werden, die durch die Zell-Schwellung verursacht werden.

In Fig. 2 sind eine Mehrzahl von Verformungsunterstützungsstrukturen 210' auf der ersten und zweiten Stirnfläche 102A, 102B dargestellt, beispielsweise jeweils drei Vertiefungen in Form einer Rille, Verprägung und/oder Sicke. Es sei jedoch anzumerken, dass die Verformungsunterstützungsstrukturen 210' auch anders ausgebildet sein können, z.B. als Erhebung, andere Anzahl und/oder andere Form, Struktur, Verlauf, Orientierung etc. oder einer Kombination daraus. Wie in Fig. 2 erkennbar, können sich Verformungsunterstützungsstrukturen 210' beispielsweise von dem Zellgehäuse 200 nach innen, z.B. dem Innenraum 220 erstrecken, bzw. sich in eine Richtung innerhalb des Gehäuses 200, z.B. zur Batterie (nicht gezeigt) hin, erstrecken. Diese Verformungsunterstützungsstruktur 210 kann als z.B. in die (erste und/oder zweite) Stirnfläche eingearbeitet sein und, insbesondere in Bezug auf das Gehäuse, eine gewisse Tiefe, insbesondere eine im Wesentlichen konstante Tiefe, aufweisen.

Wie in Fig. 2 dargestellt, können die Verformungsunterstützungsstrukturen 210 bzw. 210' im Wesentlichen im Wesentlichen linienförmig, z.B. im Wesentlichen geradlinig verlaufend ausgebildet sein. Es sei jedoch anzumerken, dass die Verformungsunterstützungsstrukturen, z.B. im Wesentlichen, geneigt, gewinkelt, schräg, gebogen, bogenförmig, geschwungen etc. und/oder im Wesentlichen konstant oder aber unterbrochen, z.B. mit einer oder mehreren Unterbrechungen oder Lücken verlaufen können.

Wie in Fig. 2 erkennbar, umfasst das prismatische Zellgehäuse 200 eine Mehrzahl von Verformungsunterstützungsstrukturen 210' auf der ersten und zweiten Stirnfläche 102A, 102B. Diese Mehrzahl von Verformungsunterstützungsstrukturen 210' ermöglicht eine gleichmäßigere Verteilung der mechanischen Belastungen, die durch die Zell-Schwellung entstehen können, insbesondere in Dickenrichtung D.

Wie weiter in Fig. 2 dargestellt, kann die Mehrzahl von Verformungsunterstützungsstrukturen 210' im Wesentlichen gleichmäßig über die erste und/oder zweite Stirnfläche 102A, 102B verteilt angeordnet sein, insbesondere im Wesentlichen über eine gesamte Breite bzw. Dicke D des prismatischen Zellgehäuses 200. Diese gleichmäßige Verteilung der Verformungsunterstützungsstrukturen 210' gewährleistet eine homogene Verteilung der mechanischen Belastungen, die durch die Zell-Schwellung entstehen können, und verhindert somit lokale Überbeanspruchungen, die zu Materialversagen führen könnten. Darüber hinaus sind die Verformungsunterstützungsstrukturen 210' im Wesentlichen parallel zueinander angeordnet und/oder verlaufen im Wesentlichen parallel zueinander. Diese parallele Anordnung kann dazu beitragen, dass die Verformungsunterstützungsstrukturen 210' gemeinsam und/oder koordiniert auf mechanische Belastungen reagieren, was die strukturelle Integrität des Zellgehäuses 200 erhöht und eine gleichmäßige Verteilung der Kräfte ermöglicht. Dies führt zu einer verbesserten Stabilität und/oder Langlebigkeit des Zellgehäuses, da die parallelen Verformungsunterstützungsstrukturen 210' die mechanischen Spannungen gleichmäßig ableiten und/oder verteilen. Ferner sind die Verformungsunterstützungsstrukturen 210' im Wesentlichen gleichmäßig zueinander beabstandet, insbesondere in Richtung der Dicke D des Gehäuses 200. Diese gleichmäßige Abstandsverteilung kann sicherstellen, dass keine Bereiche innerhalb der Stirnflächen 102A, 102B existieren, die ungeschützt und/oder unterversorgt mit Verformungsunterstützungsstrukturen 210 sind, was wiederum die Gefahr von lokalen Schwachstellen minimiert.

Wie in Fig. 2 dargestellt, können die Seitenflächen 104A, 104B des prismatischen Zellgehäuses 200, die üblicherweise den größten mechanischen Belastungen bzw. Ausdehnungen ausgesetzt sind, und eine Länge L des prismatischen Zellgehäuses 200 definieren, im Wesentlichen frei von Verformungsunterstützungsstrukturen 210 bzw. 210' sein bzw. bleiben, beispielsweise also im Wesentlichen flach und/oder eben sein. Überraschenderweise wurde festgestellt, dass die Anordnung der Verformungsunterstützungsstruktur 210 auf einer oder beider Stirnflächen 102A, 102B bereits eine gleichmäßigere Verteilung der Kräfte ermöglicht, die Belastungen und/oder Druckeinwirkungen, homogenisiert, ausgleicht und/oder gleichmäßiger verteilt und dadurch das Risiko von Materialversagen minimieren und/oder eine Zellalterung verlangsamen kann. Dies ist selbst dann gegeben, wenn die Verformungsunterstützungsstrukturen 210 ausschließlich auf den Stirnflächen 102A, 102B angeordnet sind, d.h. auf den Seitenflächen 104A, 104B (Vorderseite 104A bzw. Rückseite 104B der Zelle 200), auf denen der überwiegende Druck/die überwiegende Ausdehnung herrscht, keine Verformungsunterstützungsstrukturen 210 vorgesehen sind.

Obwohl das Vorstehende auf Ausführungsformen der Offenbarung gerichtet ist, können andere und weitere Ausführungsformen der Offenbarung ohne Abweichung vom grundlegenden Umfang davon entwickelt werden, wobei der Umfang durch die nachfolgenden Ansprüche bestimmt wird.

### Bezugszeichenliste:

- 100, 200: Zellgehäuse
- 102A, 102B: Stirnflächen
- 104A, 104B: Seitenflächen
- 106A, 106B: Oberseite bzw. Unterseite
- 108A, 108B: Kathode bzw. Anode
- 109: Separator
- 210: Verformungsunterstützungsstruktur
- 210': Mehrzahl von Verformungsunterstützungsstrukturen
- 220: Innenraum

- D: Dicke bzw. Dickenrichtung
- L: Länge bzw. Längsrichtung
- H: Höhe bzw. Höhenrichtung

## Patentansprüche

1. Prismatisches Zellgehäuse, insbesondere Zelldose, zum wenigstens teilweisen Beeinflussen einer, insbesondere mechanischen, Verformung des prismatischen Zellgehäuses, insbesondere aufgrund von Zell-Schwellung, umfassend:
wenigstens eine Verformungsunterstützungsstruktur, die eingerichtet ist, die, insbesondere mechanische, Verformung an wenigstens einer Stelle des prismatischen Zellgehäuses zu ermöglichen und/oder zu fördern.

2. Prismatisches Zellgehäuse nach Anspruch 1, ferner umfassend:
eine erste Stirnfläche und eine, insbesondere dieser im Wesentlichen gegenüberliegenden, zweite Stirnfläche,
wobei, insbesondere ausschließlich, die erste und/oder die zweite Stirnfläche wenigstens eine Verformungsunterstützungsstruktur aufweisen.

3. Prismatisches Zellgehäuse nach Anspruch 2, wobei die erste und/oder zweite Stirnfläche eine Dicke des prismatischen Zellgehäuses definieren und/oder als kürzeste Seitenflächen des prismatischen Zellgehäuses ausgebildet sind.

4. Prismatisches Zellgehäuse nach einem der vorherigen Ansprüche 2-3, wobei sich die wenigstens eine Verformungsunterstützungsstruktur im Wesentlichen über die gesamte erste und/oder zweite Stirnfläche erstreckt, vorzugsweise in Richtung einer Höhe des prismatischen Zellgehäuses.

5. Prismatisches Zellgehäuse nach einem der vorherigen Ansprüche, wobei die wenigstens eine Verformungsunterstützungsstruktur durch das prismatische Zellgehäuse ausgebildet ist, insbesondere einstückig damit.

6. Prismatisches Zellgehäuse nach einem der vorherigen Ansprüche, wobei die wenigstens Verformungsunterstützungsstruktur als eine Vertiefung ausgebildet ist, insbesondere als Verprägung, Rille und/oder Sicke.

7. Prismatisches Zellgehäuse nach einem der vorherigen Ansprüche, wobei die wenigstens eine Verformungsunterstützungsstruktur eine im Wesentlichen konstante Tiefe aufweist.

8. Prismatisches Zellgehäuse nach einem der vorherigen Ansprüche 1-5, wobei die wenigstens Verformungsunterstützungsstruktur als eine Erhebung ausgebildet ist, insbesondere als Rippe, Strebe und/oder Leiste.

9. Prismatisches Zellgehäuse nach Anspruch 8, wobei die wenigstens eine Verformungsunterstützungsstruktur eine im Wesentlichen konstante Höhe aufweist.

10. Prismatisches Zellgehäuse nach einem der vorherigen Ansprüche, wobei die wenigstens eine Verformungsunterstützungsstruktur eine Schwächungsstruktur ist, die eingerichtet ist, in dem prismatischen Zellgehäuse, insbesondere lokal, eine vorzugsweise gezielte, Schwachstelle vorzusehen, und/oder
die Verformungsunterstützungsstruktur wenigstens im Wesentlichen punktförmig oder im Wesentlichen linienförmig ausgebildet ist.

11. Prismatisches Zellgehäuse nach einem der vorherigen Ansprüche 2-10, wobei die erste und/oder zweite Stirnfläche eine Mehrzahl von Verformungsunterstützungsstrukturen aufweist.

12. Prismatisches Zellgehäuse nach Anspruch 11, wobei
die Mehrzahl von Verformungsunterstützungsstrukturen im Wesentlichen gleichmäßig über die erste und/oder zweite Stirnfläche verteilt angeordnet sind, insbesondere im Wesentlichen über eine gesamte Breite des prismatischen Zellgehäuses; und/oder
die Mehrzahl von Verformungsunterstützungsstrukturen im Wesentlichen parallel zueinander angeordnet sind und/oder verlaufen; und/oder
die Mehrzahl von Verformungsunterstützungsstrukturen im Wesentlichen gleichmäßig zueinander beabstandet sind.

13. Prismatisches Zellgehäuse nach einem der Ansprüche 11-12, wobei die Mehrzahl von Verformungsunterstützungsstrukturen wenigstens eine erste Verformungsunterstützungsstruktur in Form einer Erhebung aufweist und wenigstens eine zweite Verformungsunterstützungsstruktur in Form einer Vertiefung.

14. Prismatisches Zellgehäuse nach einem der vorherigen Ansprüche, wobei Seitenflächen des prismatischen Zellengehäuses, welche eine Länge des prismatischen Zellgehäuses definieren, im Wesentlichen frei sind von Verformungsunterstützungsstrukturen, oder wobei alle Seitenflächen des prismatischen Zellengehäuses wenigstens eine Verformungsunterstützungsstruktur aufweisen.

15. Batteriesystem, umfassend:
wenigstens ein prismatisches Zellgehäuse nach einem der vorherigen Ansprüche 1-14, und
wenigstens eine Batterie, insbesondere eine Lithium-Ionen-Batterie, die darin einsetzbar ist und insbesondere eine gewickelte Struktur aus Elektrodenmaterialien, insbesondere in Form einer Jelly-Roll-Struktur, aufweist.
